(19) Europäisches Patentamt

European Patent Office

Office européen des brevets

(11) **EP 1 715 421 B1**

(12) **EUROPEAN PATENT SPECIFICATION**

(45) Date of publication and mention
of the grant of the patent:
**01.10.2008 Bulletin 2008/40**

(51) Int Cl.:
**G06F 9/46** (2006.01)

(21) Application number: **06111315.5**

(22) Date of filing: **17.03.2006**

(54) **Workload scheduling method and system with improved planned job duration updating scheme**

Verfahren und System zur Arbeitslastplanung mit verbessertem Schema zur Aktualisierung der Dauer einer geplanten Arbeit

Procédé et système de programmation d'une charge de travail avec schéma de mise à jour de la durée de tâche planifiée amélioré

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.04.2005 EP 05103208**

(43) Date of publication of application:
**25.10.2006 Bulletin 2006/43**

(73) Proprietor: **International Business Machines Corporation**
**Armonk, NY 10504 (US)**

(72) Inventors:
• **Guccione, Francesca**
**00128, Roma (IT)**
• **Sabatini, Simona**
**66054, Vasto (IT)**

(74) Representative: **Therias, Philippe**
**Compagnie IBM France**
**Direction de Propriété Intellectuelle**
**Le Plan-du-Bois**
**06610 La Gaude (FR)**

(56) References cited:
**EP-A- 0 647 903**    **WO-A-03/005136**

## Description

### Technical field

The present invention relates to the data processing field. More specifically, the present invention relates to workload scheduling methods and systems, for controlling the execution of processes in data processing systems.

### Background art

Workload scheduling methods are commonly used in data processing systems for controlling the execution of different work units, for example jobs in a batch processing.

Several types of workload schedulers have been proposed in the last years to automate the process of submitting the execution of large quantities of jobs. An example of workload scheduler is the "Tivoli Workload Scheduler" by IBM Corporation.

A workload scheduler is a software component that submits work units, e.g. jobs, for execution according to a predefined sequence, also known as schedule or execution plan; the execution plan establishes a flow of execution of the different jobs according to several factors, such as for example temporal constraints (e.g., date, time, day of the week) and dependencies (such as completion of preceding jobs).

The execution of the jobs requires several hardware and/or software resources, such as data processing apparatuses - personal computers, workstations, server machines - operating systems, software applications, databases, storage devices, output devices and the like. System resources that are to be made available to the jobs are typically managed by another software component, known as the workload manager.

An aspect of paramount importance in scheduling workloads is the knowledge of the duration of the different operations to be performed, i.e. of the different work units, e.g. the different jobs. Knowledge of the jobs' durations is necessary for building the execution plan, because the jobs' durations are used to determine when the execution of the generic job has to start. Jobs' durations are also exploited by the workload scheduler to control the correct execution of the jobs and to detect possible abnormal conditions, based on the fact that one or more jobs run(s) longer than the expected (planned) duration(s): in these cases, the workload scheduler may issue alert messages, for example for informing a user of the delay incurred, or used by monitoring software tools, like Netwiev and IBM Tivoli Monitoring by IBM corporation.

Typically, the jobs' planned durations are estimated adopting predetermined prediction methods. The estimation should be as accurate as possible, since a bad prediction of the jobs' durations may cause the workload scheduler to be mislead in declaring an abnormal condition in respect of one or more jobs, and issue wrong alert messages.

Some known workload schedulers, like the cited Tivoli Workload Scheduler, implement an adaptive duration estimation scheme for adjusting the jobs' planned durations. Such an adaptive duration estimation scheme calls for applying a "smoothing" factor to the measured, actual duration of a generic job, and to update the planned job duration according to the "smoothed" actual duration. If however the actual job duration differs from the planned duration significantly, i.e., the duration difference exceeds a predetermined limit, the planned duration is not updated.

### Summary of the invention

The Applicant has observed that this behavior, albeit satisfactory under many respects, has however some drawbacks.

For example, when migrating from a testing data processing environment to an actual, production data processing environment, the planned jobs' durations estimated and used by the workload scheduler when running in the testing environment are usually significantly different from the expected durations of the jobs when the latter are executed in the production environment; this is for example due to the fact that the amounts of data to be processed in the production environment are usually more than those in the testing environment. The known scheme for adaptively adjusting the planned jobs' durations is in these cases almost useless, because the difference between the measured, actual production environment jobs' durations and the planned (testing environment) job's durations usually exceeds the predetermined threshold. The owner of the data processing system is thus requested to re-estimate the jobs' durations, and to manually update most of the planned jobs' durations values, since otherwise the workload scheduling system would decree, for most of the jobs executed, an abnormal duration condition. Changing the previously planned jobs' durations, estimated during the testing phase, is believed to be a heavy task.

The Applicant has found that it would be desirable to improve the currently known workload scheduling methods and systems, so that they can cope with situations like the one described above.

According to an aspect of the present invention, a method as set forth in appended claim 1 for scheduling execution of a work unit in a data processing system is provided for.

The method comprises assigning to the work unit an expected execution duration; executing the work unit; determining an actual execution duration of the work unit; determining a difference between the actual execution duration and the expected duration; and conditionally adjusting the expected execution duration assigned to the work unit based on the measured actual execution duration, wherein said conditionally adjusting includes preventing the adjustment of the expected execution duration in case said difference exceeds a predetermined threshold.

A parameter is associated to the work unit, said parameter having a prescribed value adapted to provide an indication of unconditional adjustment of the expected execution duration. Said conditionally adjusting includes adjusting the expected duration associated with the work unit based on the measured actual execution duration even if said difference exceeds the predetermined threshold in case said parameter takes the prescribed value.

In a preferred embodiment of the invention, after adjusting the expected execution duration, the parameter is set to a value different from said prescribed value, so as to inhibit the unconditional adjustment of the expected execution duration: in this way, if the user sets the parameter to the prescribed value, the unconditional update of the planned job duration can be performed only once, the first time the job is executed; any subsequent unconditional update of the planned job duration needs a specific intervention by the user, who as to deliberately set the parameter to the prescribed value. This allows avoiding to update the expected execution durations (in case of substantial deviations) unless expressely requested by the user.

Further aspects of the present invention relate to a computer program for performing the above-described method, and to a data processing system comprising means for carrying out the steps of the method according to the first aspect of the invention.

## Brief description of the drawings

The features and advantages of the present invention will be made apparent by the following detailed description of an embodiment thereof, provided merely by way of a non-limitative example, description that will be conducted making reference to the attached drawings, wherein:

| | |
|---|---|
| **Figure 1A** | is a schematic block diagram of a data processing system in which the method according to an embodiment of the present invention is applicable; |
| **Figure 1B** | shows the functional blocks of a generic computer of the data processing system, particularly a scheduling server computer; |
| **Figure 2** | depicts, in terms of functional blocks, the components, including software components, implementing a method according to an embodiment of the invention; and |
| **Figure 3** | is a schematic flowchart describing the activities involved in a scheduling method according to an embodiment of the invention. |

## Detailed description of the preferred embodiment(s)

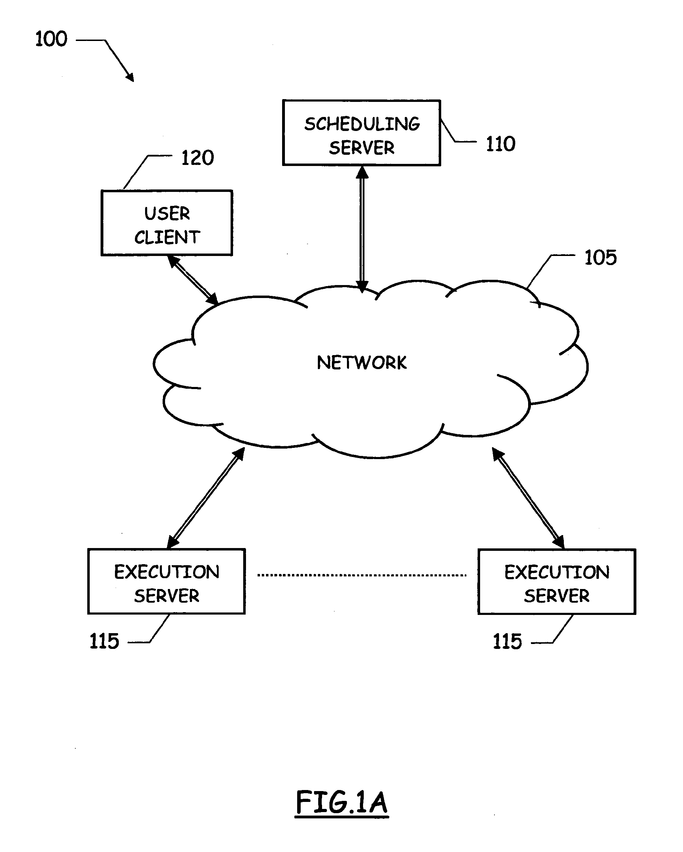

With reference in particular to **Figure 1A**, a schematic block diagram of an exemplary data processing system **100** is illustrated, in which a method according to an embodiment of the present invention can be applied.

In particular, the exemplary data processing system **100** considered in the invention embodiment being described has a distributed architecture, based on a data communications network **105**, which may typically consist in an Ethernet LAN (Local Area Network), a WAN (Wide Area Network), or the Internet. The data processing system **100** may for example be the production environment, i.e., the information infrastructure of a SOHO (Small Office/Home Office environment) or of an enterprise, a corporation, a government agency or the like.

In the data processing system **100**, a central scheduling server computer (hereinafter, shortly, scheduling server) **110** is used to submit the execution of jobs, particularly but not limitatively non-interactive jobs such as, for example, payroll programs, cost analysis applications, report generation programs, and the like. The scheduling server **110** interacts with one or more other computers or execution server computers (hereinafter, execution servers) **115**, which control the actual execution of one or more of the jobs to be executed, submitted by and under the supervision of the scheduling server **110**. The scheduling server **110** and the execution servers **115** communicate through the network **105**. Also schematically shown is a generic user client machine (user client) **120**, through which a generic user can submit jobs to the scheduling server **110**.

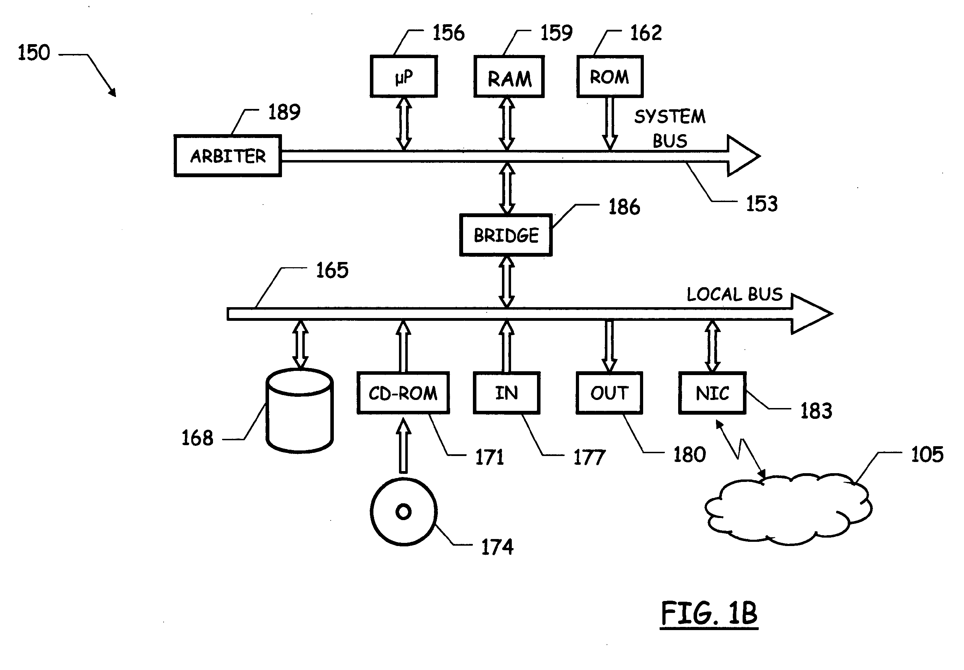

As shown in **Figure 1B**, a generic computer **150** of the data processing system **100**, such as the scheduling server **110** (a same or similar structure is also descriptive of the execution servers **115** or the user client machine **120**), is comprised of several units that are connected in parallel to a system bus **153**. In detail, one or more microprocessors ($\mu$P) **156** control the operation of the computer **150**; a RAM **159** is directly used as a working memory by the microprocessors **156**, and a ROM **162** stores the basic code for a bootstrap of the computer **150**. Peripheral units are connected (by means of respective interfaces) to a local bus **165**. Particularly, mass storage devices comprise a hard disk **168** and a CD-ROM/DVD-ROM drive **171** for reading CD-ROMs/DVD-ROMs **174**. Moreover, the computer **150** typically includes input devices **177**, for example a keyboard and a mouse, and output devices **180**, such as a display device (monitor) and a printer. A Network Interface Card (NIC) **183** is used to connect the computer **150** to the network **105**. A bridge unit **186** interfaces the system bus **153** with the local bus **165**. Each microprocessor **156** and the bridge unit **186** can operate as master agents requesting an access to the system bus **153** for transmitting information; an arbiter **189** manages the granting of the access to the system bus **153**.

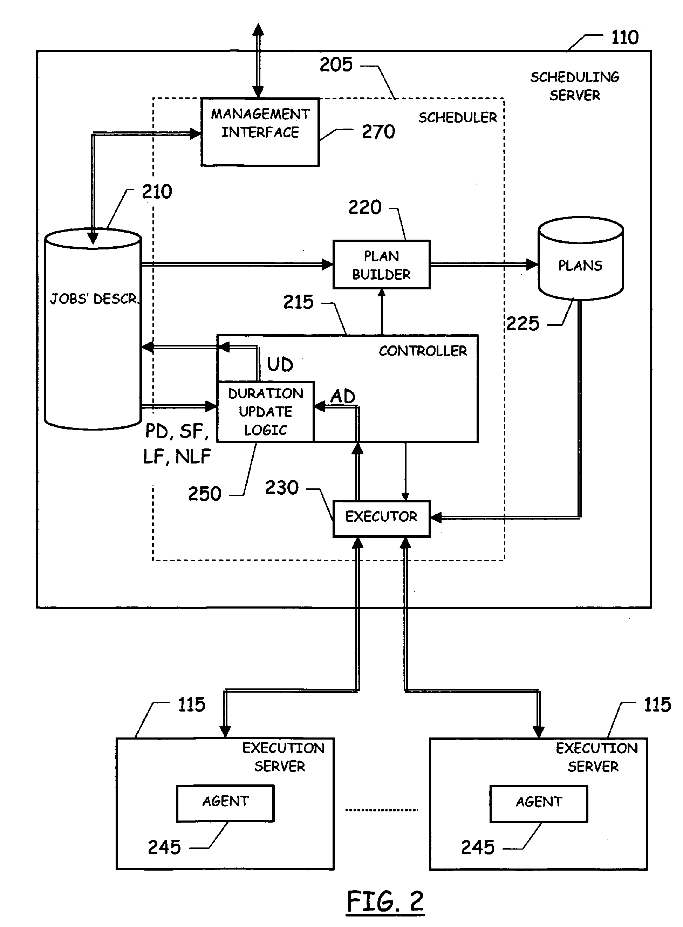

Referring now to **Figure 2**, the components, including software components, implementing a method according to an embodiment of the invention are schematically shown, being denoted as a whole with reference numeral **200**. The information (programs and data) is typically stored on the hard disks and loaded (at least partially) into the computers' working memories when the programs are running. The programs are initially installed onto the hard disks from, *e.g.*, CD-ROMs or DVD-ROMs, or they may be downloaded from, *e.g.*, a distribution server machine through the data communications network **105.**

Particularly, a workload scheduler **205** runs on the scheduling server **110.** The workload scheduler **205** is a software component used to automate the submission of desired jobs in the above-described data processing system **100**. The jobs to be executed by the workload scheduler **205** are defined in a workload database **210**, which includes, for each job submitted and to be scheduled for execution, a respective job descriptor.

In particular, the job descriptor, identified for example by a job identifier, is a collection of several pieces of information, and contains a description of the program to be executed for the execution of that job, the parameter(s) to be passed to the program to be executed, the resource required for the execution of the program, the scheduling policies.

Table 1 reported below schematizes the content of the descriptors of two generic jobs *JOBa* and *JOBb,* limitedly to the fields relevant to the understanding of the invention embodiment herein discussed:

Table 1

| JOB ID | PD | LF | SF | NLF |
|--------|-----|-----|-----|-----|
| *JOBa* | *PDa* | *LFa* | *SFa* | *YES* |
| *JOBb* | *PDb* | *LFb* | *SFb* | *NO* |

Referring to the above Table 1, the job descriptor for the generic job includes a job identifier (JOB ID), an estimated, planned duration of the job (PD), a limit feedback parameter LF, a smoothing factor (SF) and, according to an embodiment of the present invention, a no-limit feedback parameter or flag (NLF). The limit feedback parameter LF sets a value which is used to derive a threshold in a duration updating procedure, said threshold being used for excluding duration updates in case an actual job duration differs too much from the planned job duration. The smoothing factor SF is a value used in the duration updating process for calculating a new planned duration based on the previously stored planned duration and the actual duration, "smoothing" the difference between these two values. The no-limit feedback flag NLF may be used in the duration updating process for forcing the duration update irrespective of the difference between the actual job duration and the planned job duration, as will be explained in detail later on.

The scheduler **205** includes a controller module **215**, which transmits information about the jobs to be executed to a plan builder module **220**. The plan builder module **220** creates one or more execution plans for controlling a flow of execution of batches of jobs in a desired sequence (for example, covering a period of 24 hours). Each execution plan is built according to the information contained in the job descriptors, extracted by the plan builder module **220** from the workload database **210**; for example, the execution plans are built based on the temporal constraints and the dependencies of the jobs, as defined in their descriptors. The plan builder module **220** stores the execution plans thus obtained into a corresponding execution plans repository **225**.

The controller module **215** requests the execution of a selected execution plan to an executor module **230**. For this purpose, the executor module **230** extracts the definition of the current execution plan to be put in execution from the plans repository **225**. The executor module **230** also determines the resources to be used by the job(s) of the execution plan, *e.g.* which execution servers **115** are to be contacted, and accordingly submits each job in the plan for execution.

Particularly, the executor module **230** interfaces with an agent **245** running in background on each execution server **115**; the agent **245** controls the execution of the jobs on the respective execution server **115** in response to corresponding requests received from the executor module **230**, and returns thereto feedback information relating to the result of the execution. This feedback information is passed by the executor module **230** to the controller module **215**, which, based on the received feedback information, may accordingly update the corresponding jobs' descriptors in the workload database **210**. In particular, the feedback information includes information indicative of the actual duration (**AD** in the drawing) of that particular job.

The controller module **215** includes a duration update logic module **250** entrusted with the task of managing a jobs' durations update procedure. The duration update logic module **250** receives the information about the actual duration **AD** of the generic job; the duration update logic module **250** retrieves from the workload database **210**, for that job, the planned job duration (**PD** in the drawing), the limit feedback (**LF** in the drawing), the smoothing factor (**SF** in the drawing) and the no-limit feedback flag (**NLF** in the drawing). Based on all these pieces of information, the duration update logic module **250** performs a duration update process which may lead to the determination of an updated planned duration value (**UD** in the drawing); the updated planned duration value **UD** is then stored back into the workload database **210** in substitution of the previously stored planned duration value. In particular, as will be described in detail later, the duration update process performed by the duration update logic module **250** is such that the generation of the updated planned duration value **UD** is conditioned by the status of the no-limit feedback flag and the limit feedback **LF**.

The scheduler **205** further includes a management interface **270**, by which a user, for example a data processing system administrator, may interact with the scheduler **205**, particularly for managing the jobs' profiles in the workload database **210**, *e.g.* adding descriptors of new jobs to be submitted to the scheduling; in particular, through the management interface **270** the system administrator may set the no-limit feedback flag NLF to the desired status.

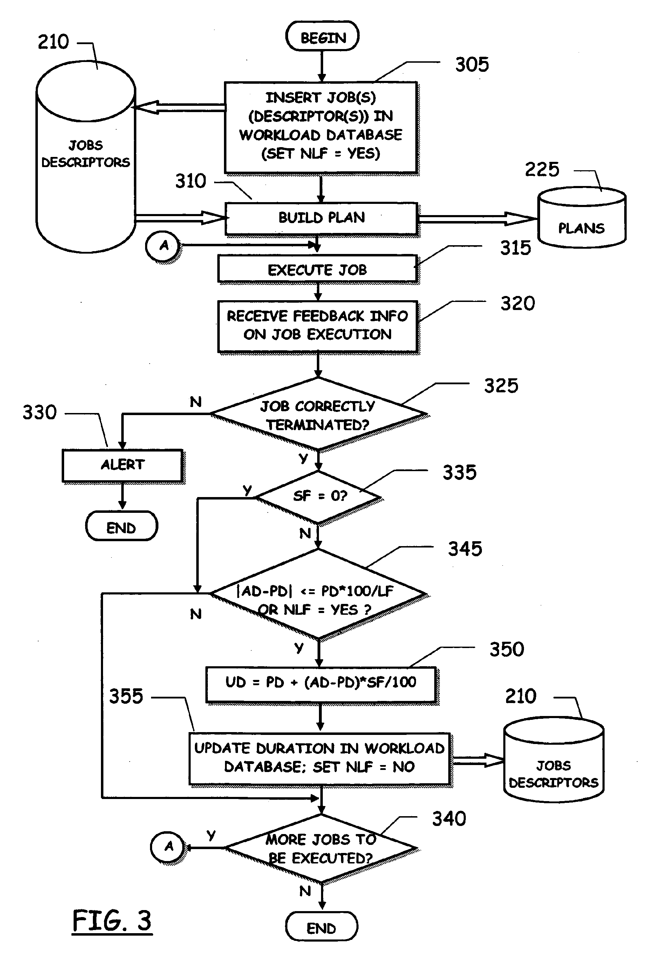

A method according to an embodiment of the present invention will be now described, making reference to the schematic flowchart of **Figure 3**.

A user, for example the administrator of the data processing system **100**, prepares descriptors of jobs to be scheduled for execution, and stores them in the workload database **210** (block **305**). In particular, the user specifies the jobs' estimated durations, which will be used as planned durations **PD**; the planned durations are for example the durations estimated during the trials conducted in a test environment (*i.e.*, the estimated durations may significantly differ from the actual jobs' durations expected to be encountered in the production environment **100**). The user also specifies the values for the smoothing factor **SF**, and the limit feedback **LF**; according to an embodiment of the present invention, the user has the possibility of setting the no-limit feedback flag **NLF** to a prescribed state, *e.g.* "*YES*" (the default state of the no-limit feedback flag **NLF** being preferably set to the opposite state, *e.g.* "*NO*"). For example, referring to the schematic table Table 1 reported in the foregoing, the user may enter descriptors for the two jobs *JOBa* and *JOBb*; *JOBa* has an associated smoothing factor equal to *SFa*, and a limit feedback equal to *LFa*; its no-limit feedback flag is set to *YES*; *JOBb* has an associated smoothing factor equal to *SFb*, and a limit feedback equal to *LFb*; its no-limit feedback flag is set to *NO*.

In particular, the user may set the no-limit feedback flag to *YES* when a new job is inserted in the workload database (in such a case, only a roughly estimated planned duration may be available to the user, determined during the tests conducted in the testing environment, which is likely to differ substantially from the actual job duration in the production environment); as another possibility, the user may set the no-limit feedback flag of a generic job, already present in the workload database, to *YES*, in case of significant changes to the data processing environment, which may cause the actual job duration to significantly depart from the previously calculated duration.

Exploiting the job descriptors stored in the workload database **210**, the plan builder module **220** builds an execution plan, which is stored in the plans repository **225** (block **310**). For example, the execution plan may provide for the execution of the jobs *JOBa* and *JOBb* previously mentioned.

The generated execution plan is submitted to the executor **230**, which identifies the jobs of the plan that are available for being executed, according for example to their planned time of execution and their dependencies.

For each job available for execution, the executor module **230** determines the resources (*e.g.* the execution servers **115**) needed for execution and submits the job (block **315**).

After submitting to execution the job, *e.g.* job *JOBa*, the executor module **230** waits for a feedback information about the job's execution, for example from the agent **245** of the execution server **115** on which the job has been submitted. Once the job execution terminates (either because the job has correctly completed, or because the execution has been deliberately interrupted), the executor module **230** receives the corresponding feedback information (block **320**).

The executor module **230** passes the feedback information to the controller module **215**, which checks whether the job execution has correctly terminated (decision block **325**). In the negative case (decision block **325**, exit branch **N**), an alert signaling is preferably issued (block **330**), and the execution of the scheduled plan is for example terminated.

In case the execution of the job has terminated correctly (exit branch **Y** of decision block **325**), the controller module **215** logs it into the workload database **210**. The duration update logic module **250** starts a job's duration updating procedure, directed to conditionally updating the planned duration *PDa* of the job *JOBa* stored in the workload database **210**. In particular, according to an embodiment of the present invention, the duration update logic module **250** retrieves from the workload database **210** the stored planned duration *PDa*, the smoothing factor *SFa*, the limit feedback *LFa* and the no-limit feedback flag *NLFa* in respect of the job *JOBa*.

The duration update logic module **250** firstly checks whether the smoothing factor *SFa* is equal to zero, a condition meaning that no duration update is to be performed (decision block **335**). In the affirmative case (exit branch **Y** of decision block **335**), the remaining of the duration update procedure is skipped (the stored planned duration value is left unchanged). The executor module **230** ascertains whether there are other jobs to be executed (decision block **340**), like for example the job *JOBb* and, in the affirmative case (exit branch **Y** of decision block **340**), the remaining jobs are executed (the operation flow jumps back to block **315**, as schematized by the connector **A**).

If the smoothing factor *SFa* is different from zero (exit branch **N** of decision block **335**), the duration update logic module **250** conditionally calculates an updated job duration value; in particular, the updated job duration value is calculated provided that the following condition is verified:

$$|ADa-PDa| \; <= \; PDa*100/LFa \; \text{ OR } \; NLFa \; = \; YES$$

wherein |ADa-PDa| is the difference between the planned duration *PDa* and the actual duration *ADa* (in absolute value), *PDa*100/LFa* sets the limit (threshold) to the admissible difference between the planned duration *PDa* and the actual duration *ADa*, and *NLFa* = YES is an overriding condition that, if verified, overrides the condition based on the value of the actual duration to planned duration difference. In other words, in case the difference between the planned duration *PDa* and the actual duration ADa does not exceed the prescribed limit (expressed as a percentage *LFa* of the planned duration), or, irrespective of the fact that such limit may have been exceeded, in case the user has set the no-limit feedback flag *NLFa* to YES (exit branch **Y** of decision block **345**), the duration update logic module **250** calculates an updated job duration value (block **350**). If the condition above is not verified, *i.e.*, if the difference between the actual job duration and the planned job duration exceeds the prescribed limit, and this is not overridden by the fact that the no-limit feedback flag is set to *YES*, no updated job duration value is calculated.

In particular, the update duration value is calculated in the following way:

$$UDa \; = \; PDa \; + \; (ADa-PDa)*SFa/100$$

wherein *UDa* is the updated duration value for the job *JOBa*; in other words, the updated duration value is calculated by adding to the previously estimated planned duration *PDa* a quantity (with algebraic sign) equal to the difference between the actual duration *ADa* and the planned duration *PDa*, smoothed to an extent determined by the smoothing factor *SFa*.

The controller module **215** then causes the calculated updated duration value to replace, in the workload database **210**, the previously estimated duration *PDa*. Additionally, according to a preferred embodiment of the invention, the no-limit feedback flag *NLFa* is reset to *NO* (block **355**): in this way, the next time the job *JOBa* is executed, the job duration update procedure will be executed only if the difference between the actual job duration and the planned job duration does not exceed the prescribed, maximum limit; in other words, after the flag *NLF* is set, the unconditional update of the planned job duration will be performed only once, the first time the job is executed; any subsequent unconditional update of the planned job duration needs a specific intervention by the user, who as to deliberately set the flag *NLF* to *YES*.

The executor module **230** checks whether there are other jobs in the plan to be executed (decision block **340**). In the affirmative case, the actions described in the foregoing are repeated for the remaining jobs, *e.g.* for the job *JOBb*.

Thanks to the present invention, the estimated duration of jobs to be scheduled for execution can be adjusted even in case the difference of the actual job duration compared to the planned duration calculated previously is substantial, particularly exceeding a prescribed limit (normally set to a relatively low value); this makes it possible to automatically adjust the job planned duration even in those cases where it is known in advance that the differences between previously estimated durations and actual durations are substantial, such as when migrating from a testing environment to a production environment, or when making substantial changes to the production environment. It is not necessary to manually re-estimate and update the jobs' durations.

This result is achieved without the necessity of artificially increasing the prescribed deviation limit (set by the limit feedback parameter): it is in fact preferable that the adjustment of the planned duration be performed only if the actual duration does not depart too much from the planned duration, otherwise the planned duration may drift in time due to repeated, not normal job executions.

The implementation of the present invention has been described making reference to an exemplary embodiment thereof, however those skilled in the art will be able to envisage modifications to the described embodiment, as well as to devise different embodiments, without however departing from the scope of the invention as defined in the appended claims.

For example, the provision of a smoothing factor may be dispensed for, and/or the duration update procedure may be not conditioned by the value of the smoothing factor.

Even though in the preceding description reference has been made to non-interactive jobs, this is not to be intended as a limitation; indeed, the method of the invention can be used to schedule the execution of any kind of work units (for example, interactive tasks). Moreover, the proposed method applies to every job or to selected ones only, and to every resource or to some of them only.

The invention can be applied in a data processing system having a different architecture or based on equivalent elements; each computer can have another structure or it can be replaced with any data processing entity (such as a PDA, a mobile phone, and the like). In particular, although described making reference to a distributed data processing system, the invention may also find application in non-distributed data processing systems.

The programs may be pre-loaded onto the hard disks, or be sent to the computers through the data communications network, or be broadcast, or more generally they can be provided in any other form directly loadable into the working memories of the computers.

The method according to the present invention also leads itself to be carried out with a hardware structure (for example, integrated in chips of semiconductor material), or with a combination of software and hardware.

## Claims

1. A method for scheduling execution of a work unit in a data processing system (**100**), the method comprising:

   assigning to the work unit an expected execution duration (**PD**);
   executing the work unit (**315**);
   determining an actual execution duration (**AD**) of the work unit (**320**);
   determining a difference between the actual execution duration and the expected execution duration; and
   conditionally adjusting (**345, 350, 355**) the expected execution duration associated with the work unit based on the measured actual execution duration, wherein said conditionally adjusting includes preventing the adjustment of the expected execution duration in case said difference exceeds a predetermined threshold (**LF**),

   **characterized by** further comprising:

   associating to the work unit a parameter (**NLF**) having a prescribed value adapted to provide an indication of unconditional adjustment of the expected execution duration,
   said unconditionally adjusting including adjusting the expected execution duration assigned to the work unit based on the measured actual execution duration even if said difference exceeds the predetermined threshold in case said parameter takes the prescribed value.

2. The method according to claim 7, including, after adjusting the expected execution duration, setting (**355**) the parameter to a value different from said prescribed value, said different value not providing said indication of adjustment of the expected execution duration.

3. The method according to claim 1 or 2, in which said adjusting includes calculating a new planned duration based on the actual execution duration and the expected duration, said calculation depending on a predetermined factor (**SF**).

4. The method according to claim 3, in which said conditionally adjusting includes preventing the adjustment of the expected execution duration in case said factor (**SF**) takes a prescribed value.

5. The method, according to claim 4, in which said conditionally adjusting includes preventing the adjustment of the expected execution duration in case said factor (**SF**) takes a value which is O.

6. The method according to any one of the preceding claim, in which said parameter is user-configurable.

7. The method according to any one of the preceding claims, in which said parameter is included in a work unit descriptor containing data descriptive of the work unit used for scheduling the work unit execution.

8. A computer program comprising instructions for carrying out the steps of the method according to anyone of claims 1 to 6 when said computer program is executed on a computer.

9. A data processing system including means adapted to perform the steps of the method according to any one of claims 1 to 6.

**Patentansprüche**

1. Verfahren zum Planen des zeitlichen Ablaufs der Ausführung einer Arbeitseinheit in einem Datenverarbeitungssystem (**100**), wobei das Verfahren Folgendes umfasst:

   Zuweisen einer erwarteten Ausführungsdauer (**PD**) zur Arbeitseinheit;
   Ausführen der Arbeitseinheit (**315**);
   Ermitteln einer tatsächlichen Ausführungsdauer (**AD**) der Arbeitseinheit (**320**);
   Ermitteln eines Unterschieds zwischen der tatsächlichen Ausführungsdauer und der erwarteten Ausführungsdauer; und
   bedingtes Anpassen (**345, 350, 355**) der der Arbeitseinheit zugeordneten erwarteten Ausführungsdauer auf der Grundlage der gemessenen tatsächlichen Ausführungsdauer, wobei die bedingte Anpassung das Verhindern der Anpassung der erwarteten Ausführungsdauer beinhaltet, falls der Unterschied einen festgelegten Schwellenwert (**LF**) überschreitet,

   **dadurch gekennzeichnet, dass** das Verfahren außerdem Folgendes umfasst:

   Zuordnen eines Parameters (**NLF**) mit einem vorgeschriebenen Wert zur Arbeitseinheit, der geeignet ist, eine Meldung einer bedingungslosen Anpassung der erwarteten Ausführungsdauer bereitzustellen,
   wobei die bedingungslose Anpassung das Anpassen der der Arbeitseinheit auf der Grundlage der gemessenen tatsächlichen Ausführungsdauer zugeordneten erwarteten Ausführungsdauer beinhaltet, selbst wenn der Unterschied den festgelegten Schwellenwert überschreitet, falls der Parameter den vorgeschriebenen Wert annimmt.

2. Verfahren nach Anspruch 1, das nach dem Anpassen der erwarteten Ausführungsdauer das Setzen (**355**) des Parameters auf einen vom vorgeschriebenen Wert verschiedenen Wert beinhaltet, wobei der verschiedene Wert die Meldung der Anpassung der erwarteten Ausführungsdauer nicht bereitstellt.

3. Verfahren nach Anspruch 1 oder 2, wobei das Anpassen das Berechnen einer neu geplanten Dauer auf der Grundlage der tatsächlichen Ausführungsdauer und der erwarteten Dauer beinhaltet, wobei die Berechnung von einem festgelegten Faktor (**SF**) abhängt.

4. Verfahren nach Anspruch 3, wobei das bedingte Anpassen das Verhindern der Anpassung der erwarteten Ausführungsdauer beinhaltet, falls der Faktor (**SF**) einen vorgeschriebenen Wert annimmt.

5. Verfahren nach Anspruch 4, wobei das bedingte Anpassen das Verhindern der Anpassung der erwarteten Ausführungsdauer beinhaltet, falls der Faktor (**SF**) einen Wert von 0 annimmt.

6. Verfahren nach irgendeinem der vorhergehenden Ansprüche, wobei der Parameter durch den Benutzer konfigurierbar ist.

7. Verfahren nach irgendeinem der vorhergehenden Ansprüche, wobei der Parameter in einem Arbeitseinheit-Deskriptor enthalten ist, der die Arbeitseinheit beschreibende Daten enthält, die zum Planen des zeitlichen Ablaufs der Ausführung der Arbeitseinheit verwendet werden.

8. Computerprogramm, das Befehle zum Ausführen der Schritte des Verfahrens nach irgendeinem der Ansprüche 1 bis 6 umfasst, wenn das Computerprogramm in einem Computer ausgeführt wird.

9. Datenverarbeitungssystem, das ein Mittel umfasst, das zum Ausführen der Schritte des Verfahrens nach irgendeinem der Ansprüche 1 bis 6 geeignet ist.

**Revendications**

1. Un procédé pour programmer l'exécution d'une unité de travail dans un système de traitement de données (100), le procédé comprenant :

   l'affectation, à l'unité de travail, d'une drée d'exécution escomptée (PD) ;

l'exécution de l'unité de travail (315) ;
la détermination d'une durée d'exécution réelle (AD) de l'unité de travail (320) ;
la détermination d'une différence entre la durée d'exécution réelle et la durée d'exécution escomptée ; et
l'ajustement conditionnel (345, 350, 355) de la durée d'exécution escomptée, associée à l'unité de travail, basée sur la durée d'exécution réelle mesurée, dans lequel ledit ajustement conditionnel comprend l'empêchement de l'ajustement de la durée d'exécution escomptée, dans le cas où ladite différence dépasse un seuil (LF) prédéterminé,

**caractérisé par** le fait de comprendre, en outre :

l'association, à l'unité de travail, d'un paramètre (NLF) ayant une valeur prescrite, adaptée pour fournir une indication d'ajustement inconditionnel de la durée d'exécution escomptée,
ledit ajustement inconditionnel comprenant l'ajustement de la durée d'exécution escomptée, affectée à l'unité de travail, basée sur la durée d'exécution réelle mesurée, même si ladite différence dépasse le seuil prédéterminé, dans le cas où ledit paramètre prend la valeur prescrite.

2. Le procédé selon la revendication 1, comprenant, après ajustement de la durée d'exécution escomptée, le réglage (355) du paramètre à une valeur différente de ladite valeur prescrite, ladite valeur différente ne fournissant par ladite indication d'ajustement de la durée d'exécution escomptée.

3. Le procédé selon la revendication 1 ou 2, dans lequel ledit ajustement comprend le calcul d'une nouvelle durée planifiée, basée sur la durée d'exécution réelle et la durée escomptée, ledit calcul dépendant d'un facteur prédéterminé (SF).

4. Le procédé selon la revendication 3, dans lequel ledit ajustement conditionnel comprend l'empêchement de l'ajustement de la durée d'exécution escomptée, dans le cas où ledit facteur (SF) prend une valeur prescrite.

5. Le procédé selon la revendication 4, dans lequel ledit ajustement conditionnel comprend l'empêchement de l'ajustement de la durée d'exécution escomptée, dans le cas où ledit facteur (SF) prend une valeur de 0.

6. Le procédé selon l'une quelconque des revendications précédentes, dans lequel ledit paramètre est configurable par l'utilisateur.

7. Le procédé selon l'une quelconque des revendications précédentes, dans lequel ledit paramètre est inclus dans un descripteur d'unité de travail contenant des données, descriptives de l'unité de travail utilisée pour la programmation de l'exécution de l'unité de travail.

8. Un programme informatique, comprenant des instructions pour exécuter les étapes du procédé selon l'une quelconque des revendications 1 à 6, lorsque ledit programme informatique est exécuté sur un ordinateur.

9. Un programme informatique, comprenant des moyens, adaptés pour exécuter les étapes du procédé selon l'une quelconque des revendications 1 à 6.

100

SCHEDULING
SERVER — 110

120

USER
CLIENT

105

NETWORK

EXECUTION
SERVER

EXECUTION
SERVER

115

115

FIG.1A

FIG. 1B

FIG. 2

210

BEGIN

305

INSERT JOB(S)
(DESCRIPTOR(S)) IN
WORKLOAD DATABASE
(SET NLF = YES)

JOBS
DESCRIPTORS

310

225

BUILD PLAN

PLANS

A

315

EXECUTE JOB

320

RECEIVE FEEDBACK INFO
ON JOB EXECUTION

325

330

N

JOB CORRECTLY
TERMINATED?

ALERT

Y

335

SF = 0?

END

Y

N

345

$|AD-PD| <= PD*100/LF$
OR NLF = YES ?

N

Y

350

$UD = PD + (AD-PD)*SF/100$

210

355

UPDATE DURATION IN WORKLOAD
DATABASE; SET NLF = NO

JOBS
DESCRIPTORS

340

A

Y

MORE JOBS TO
BE EXECUTED?

N

**FIG. 3**

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Tivoli Workload Scheduler. IBM Corporation